# EUROPEAN PATENT APPLICATION

(11) **EP 4 513 963 A1**
(43) Date of publication of application: **26.02.2025**
(21) Application number: 23791260.5
(22) Date of filing: 19.04.2023
(51) Int. Cl.: H04W 36/00

(54) **CONDITIONAL HANDOVER METHOD AND NETWORK SIDE DEVICES**

(30) Priority: 22.04.2022 CN 202210429731
(71) Applicant: Vivo Mobile Communication Co., Ltd., Dongguan, Guangdong 523863 (CN)
(72) Inventor: LIU, Xuanbing, Dongguan, Guangdong 523863 (CN); BAO, Wei, Dongguan, Guangdong 523863 (CN)
(74) Representative: Cabinet Beaumont
(86) International application number: PCT/CN2023/089156
(87) International publication number: WO 2023/202605

(57) **Abstract**

Embodiments of this application disclose a conditional handover method and a network side device, and belong to the field of communication technologies. The conditional handover method in the embodiments of this application includes: sending, by a first network side device, a handover request message to a second network side device, where the first network side device is a source node of conditional handover, the second network side device is a target node of the conditional handover, and the handover request message is used for the source node to request the target node to prepare resource for the conditional handover; and receiving, by the first network side device, a handover request acknowledgement message from the second network side device, where the handover request acknowledgement message is used for the target node to notify the source node of the prepared resource, and the handover request acknowledgement message includes conditional PScell addition or change CPAC information.

## Description

### CROSS-REFERENCE TO RELATED APPLICATIONS

This application claims priority to Chinese Patent Application No. 202210429731.2, filed with the China National Intellectual Property Administration on April 22, 2022 and entitled "CONDITIONAL HANDOVER METHOD AND NETWORK SIDE DEVICE", which is incorporated herein by reference in its entirety.

### TECHNICAL FIELD

This application relates to the field of communication technologies, and specifically, to a conditional handover method and a network side device.

### BACKGROUND

Dual connectivity (Dual Connectivity, DC) is to provide resource of two network nodes (access network elements) for a terminal. One of the network nodes is a master node (Master node, MN) and the other is a secondary node (Secondary node, SN). A secondary cell group (Secondary Cell Group, SCG) controlled by the SN includes a primary secondary cell (Primary Secondary Cell, PSCell) and some secondary cells (Scells).

How a network provides a candidate cell configuration for conditional PScell addition or change (Conditional PSCell Addition or Change, CPAC) in a process of configuring conditional handover (Conditional Handover, CHO) is a technical problem urgently to be resolved in the related art.

### SUMMARY

Embodiments of this application provide a conditional handover method and a network side device, which can resolve a problem in which a candidate cell configuration used for CPAC cannot be provided in the related art.

According to a first aspect, a conditional handover method is provided, including: sending, by a first network side device, a handover request message to a second network side device, where the first network side device is a source node of conditional handover, the second network side device is a target node of the conditional handover, and the handover request message is used for the source node to request the target node to prepare resource for the conditional handover; and receiving, by the first network side device, a handover request acknowledgement message from the second network side device, where the handover request acknowledgement message is used for the target node to notify the source node of the prepared resource, and the handover request acknowledgement message includes conditional PScell addition or change CPAC information.

According to a second aspect, a conditional handover method is provided, including: receiving, by a second network side device, a handover request message from a first network side device, where the first network side device is a source node of conditional handover, the second network side device is a target node of the conditional handover, and the handover request message is used for the source node to request the target node to prepare resource for the conditional handover; and sending, by the second network side device, a handover request acknowledgement message to the first network side device, where the handover request acknowledgement message is used for the target node to notify the source node of the prepared resource, and the handover request acknowledgement message includes CPAC information.

According to a third aspect, a first network side device is provided, including: a sending module, configured to send a handover request message to a second network side device, where the first network side device is a source node of conditional handover, the second network side device is a target node of the conditional handover, and the handover request message is used for the source node to request the target node to prepare resource for the conditional handover; and a receiving module, configured to receive a handover request acknowledgement message from the second network side device, where the handover request acknowledgement message is used for the target node to notify the source node of the prepared resource, and the handover request acknowledgement message includes CPAC information.

According to a fourth aspect, a second network side device is provided, including: a receiving module, configured to receive a handover request message from a first network side device, where the first network side device is a source node of conditional handover, the second network side device is a target node of the conditional handover, and the handover request message is used for the source node to request the target node to prepare resource for the conditional handover; and a sending module, configured to send a handover request acknowledgement message to the first network side device, where the handover request acknowledgement message is used for the target node to notify the source node of the prepared resource, and the handover request acknowledgement message includes CPAC information.

According to a fifth aspect, a network side device is provided. The network side device includes a processor and a memory. The memory stores a program or instructions executable on the processor. The program or the instructions, when executed by the processor, implement the steps of the method according to the first aspect or the second aspect.

According to a sixth aspect, a first network side device is provided, including a processor and a communication interface. The communication interface is configured to send a handover request message to a second network side device, where the first network side device is a source node of conditional handover, the second network side device is a target node of the conditional handover, and the handover request message is used for the source node to request the target node to prepare resource for the conditional handover; and receive a handover request acknowledgement message from the second network side device, where the handover request acknowledgement message is used for the target node to notify the source node of the prepared resource, and the handover request acknowledgement message includes CPAC information.

According to a seventh aspect, a second network side device is provided, including a processor and a communication interface. The communication interface is configured to receive a handover request message from a first network side device, where the first network side device is a source node of conditional handover, the second network side device is a target node of the conditional handover, and the handover request message is used for the source node to request the target node to prepare resource for the conditional handover; and send a handover request acknowledgement message to the first network side device, where the handover request acknowledgement message is used for the target node to notify the source node of the prepared resource, and the handover request acknowledgement message includes CPAC information.

According to an eighth aspect, a conditional handover system is provided, including: a terminal and a network side device. The network side device may be configured to perform the steps of the method according to the first aspect or the second aspect.

According to a ninth aspect, a readable storage medium is provided. The readable storage medium stores a program or instructions. The program or the instructions, when executed by a processor, implement the steps of the method according to the first aspect, or implement the steps of the method according to the second aspect.

According to a tenth aspect, a chip is provided. The chip includes a processor and a communication interface. The communication interface is coupled to the processor. The processor is configured to execute a program or instructions, to implement the steps of the method according to the first aspect, or implement the steps of the method according to the second aspect.

According to an eleventh aspect, a computer program/program product is provided. The computer program/program product is stored in a storage medium. The computer program/program product is executed by at least one processor, to implement the steps of the method according to the first aspect, or implement the steps of the method according to the second aspect.

In the embodiments of this application, the first network side device sends the handover request message to the second network side device. The first network side device receives the handover request acknowledgement message from the second network side device. The handover request acknowledgement message includes CPAC information. Because the handover request acknowledgement message includes the CPAC information, it is convenient to provide a terminal with a candidate cell configuration used for CPAC, and it is further conducive to including a plurality of CPAC candidate cells in conditional handover CHO.

### BRIEF DESCRIPTION OF THE DRAWINGS

FIG. 1 is a schematic diagram of a wireless communication system according to an embodiment of this application;
FIG. 2 is a schematic flowchart of a conditional handover method according to an embodiment of this application;
FIG. 3 is a schematic flowchart of a conditional handover method according to an embodiment of this application;
FIG. 4 is a schematic flowchart of a conditional handover method according to an embodiment of this application;
FIG. 5 is a schematic flowchart of a conditional handover method according to an embodiment of this application;
FIG. 6 is a schematic flowchart of a conditional handover method according to an embodiment of this application;
FIG. 7 is a schematic structural diagram of a first network side device according to an embodiment of this application;
FIG. 8 is a schematic structural diagram of a second network side device according to an embodiment of this application;
FIG. 9 is a schematic structural diagram of a communication device according to an embodiment of this application; and
FIG. 10 is a schematic structural diagram of a network side device according to an embodiment of this application.

### DETAILED DESCRIPTION

The technical solutions in embodiments of this application are clearly described below with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

The terms such as "first" and "second" in the specification and claims of this application are used to distinguish between similar objects, but are not used to describe a specific sequence or order. It should be understood that the terms used in this way are interchangeable in a proper case, so that the embodiments of this application can be implemented in a sequence different from the sequence shown or described herein. The objects distinguished by "first" and "second" are usually of a type, and a number of the objects is not limited. For example, a number of first objects may be one or more. In addition, "and/or" in the specification and claims represents at least one of connected objects, and the character "/" generally indicates an "or" relationship between associated objects.

It should be noted that the technologies described in the embodiments of this application are not limited to a long-term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" may usually be used interchangeably in the embodiments of this application, and the described technologies can be applied to the systems and radio technologies mentioned above, and can also be applied to other systems and radio technologies. The following descriptions describe a new radio (New Radio, NR) system for example purposes, and NR terms are used in most of the following descriptions, but the technologies may also be applied to applications other than an NR system application, such as a 6th generation (6^{th} Generation, 6G) communication system.

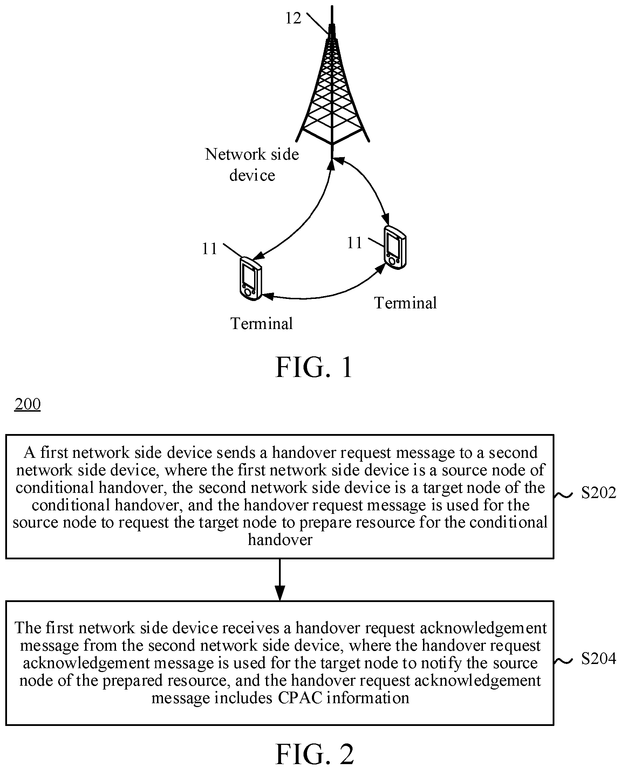

FIG. 1 is a block diagram of a wireless communication system to which an embodiment of this application is applicable. The wireless communication system includes a terminal 11 and a network side device 12. The network side device 12 may include an access network device. The access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another proper term in the art. As long as the same technical effect is achieved, the base station is not limited to a specific technology vocabulary. It should be noted that a base station in the NR system is only used as an example for description in the embodiments of this application, and a specific type of the base station is not limited. The conditional handover method provided in the embodiments of this application is described in detail below with reference to the accompanying drawings and through some embodiments and application scenarios thereof.

As shown in FIG. 2, an embodiment of this application provides a conditional handover method 200. The method may be performed by a first network side device. In other words, the method may be performed by software or hardware installed on the first network side device. The method includes the following steps.

S202: A first network side device sends a handover request message to a second network side device, where the first network side device is a source node of conditional handover, the second network side device is a target node of the conditional handover, and the handover request message is used for the source node to request the target node to prepare resource for the conditional handover.

In this embodiment, the first network side device may be a source master node (for example, a Source-MN, S-MN) of the conditional handover, and the second network side device may be a target master node (for example, a Target-MN, T-MN) of the conditional handover.

S204: The first network side device receives a handover request acknowledgement message from the second network side device, where the handover request acknowledgement message is used for the target node to notify the source node of the prepared resource, and the handover request acknowledgement message includes conditional PScell addition or change (conditional PScell addition or change, CPAC) information.

CPAC mentioned in the embodiments of this application may include conditional PScell addition (Conditional PSCell Addition, CPA) and/or conditional PScell change (Conditional PSCell Change, CPC).

Optionally, the CPAC information includes at least one of the following (1) to (4):
(1) CPAC candidate cell information. The CPAC candidate cell information includes at least one of the following: frequency information; a physical cell identifier; or a cell group configuration.
(2) CPAC-related measurement requirement information. The CPAC-related measurement requirement information includes at least one of the following: a. a measurement object, where the measurement object includes frequency information about measuring a CPAC candidate cell; b. a measurement report configuration; c. a conditional trigger configuration, where the conditional trigger configuration includes a measurement event configuration corresponding to an execution condition of a CPAC candidate cell; or d. a configuration of a measurement identifier (ID), where a measurement configuration associated with the measurement ID includes at least one of the following: an MCG measurement configuration, an SCG measurement configuration, or a target MCG measurement configuration.
(3) CPAC conditional reconfiguration identifier information, where the CPAC conditional reconfiguration identifier information includes a conditional reconfiguration identifier corresponding to at least one CPAC candidate cell prepared by the second network side device.
(4) CPAC conditional reconfiguration information, where the CPAC conditional reconfiguration information includes at least one of the following: a conditional reconfiguration identifier; an execution condition; or radio resource control (Radio Resource Control, RRC) reconfiguration.

According to the conditional handover method provided in this embodiment of this application, the first network side device sends the handover request message to the second network side device. The first network side device receives the handover request acknowledgement message from the second network side device. The handover request acknowledgement message includes the CPAC information. Because the handover request acknowledgement message includes the CPAC information, it is convenient to provide a terminal with a candidate cell configuration used for the CPAC, and it is further conducive to including a plurality of CPAC candidate cells in the conditional handover CHO.

For the foregoing candidate cell configuration that facilitates providing the CPAC in the CHO, for example, in a case of measurement based on a master cell group (Master Cell Group, MCG), the handover request acknowledgement message includes the CPAC information, so that the S-MN is instructed to reconfigure the MCG measurement configuration. In a case of measurement based on a secondary cell group (Secondary Cell Group, SCG), the handover request acknowledgement message includes the CPAC information, so that the S-MN sends the CPAC information to a source secondary node (S-SN) to initiate a secondary node (SN) modification process. The SN may reconfigure the SCG measurement configuration.

The conditional handover method provided in this embodiment of this application supports inclusion of a plurality of CPAC candidate cells in the conditional handover (Conditional Handover, CHO). This facilitates smooth performing of a process of conditional handover (Conditional Handover, CHO) with CPAC.

Optionally, in an embodiment, the CPAC information includes the CPAC-related measurement requirement information, the CPAC-related measurement requirement information includes the configuration of the measurement ID, and the measurement configuration associated with the measurement ID is the MCG measurement configuration. The method further includes: the first network side device sends an RRC reconfiguration message to a terminal. The RRC reconfiguration message includes the MCG measurement configuration, and the MCG measurement configuration includes measurement information related to a CPAC candidate cell. A specific performing process of this embodiment may refer to subsequent description of Embodiment 1.

In this embodiment, measurement is based on the MCG, and the handover request acknowledgement message includes the CPAC information, so that the S-MN is instructed to reconfigure the MCG measurement configuration.

Optionally, in an embodiment, after the first network side device receives the handover request acknowledgement message from the second network side device, the method further includes: the first network side device sends the CPAC information to a third network side device, where the third network side device is a source secondary node (S-SN) of the conditional handover; and the first network side device receives an SCG measurement configuration from the third network side device, where the SCG measurement configuration includes measurement information of a CPAC candidate cell.

In this embodiment, at least one of the following is satisfied: (1) the first network side device sends the CPAC information to the third network side device if the handover request acknowledgement message includes the CPAC information; or (2) the CPAC information sent by the first network side device is carried by a secondary node modification request message.

The method in this embodiment further includes: the first network side device sends an RRC reconfiguration message to a terminal, where the RRC reconfiguration message includes the SCG measurement configuration, and the SCG measurement configuration includes measurement information related to a CPAC candidate cell.

A specific performing process of this embodiment may refer to subsequent description of Embodiment 2.

In this embodiment, measurement is based on the SCG, and the handover request acknowledgement message includes the CPAC information, so that the S-MN sends the CPAC information to the S-SN, to initiate an SN modification process, and the S-SN reconfigures the SCG measurement configuration.

Optionally, based on the foregoing embodiments, the handover request message may include at least one of the following:
(1) indication information used for indicating initiating conditional handover with CPAC or multi-RAT dual connectivity MR-DC multi-RAT dual connectivity (Multi Rat-Dual Connectivity, MR-DC);
(2) indication information used for indicating supporting CPAC;
(3) indication information used for indicating supporting MR-DC;
(4) indication information used for indicating supporting a plurality of SCG candidate cells;
(5) the maximum number of at least one of the following that the second network side device is allowed to add: a CPAC candidate secondary node SN, a candidate PScell, or a candidate cell;
(6) a range of conditional reconfiguration identifier (CondReconfigId) that the second network side device is allowed to add, for example, the S-MN may inform a T-MN1 that a range of a CondReconfigId that can be added is 1 to 4; and the S-MN may inform a T-MN2 that a range of a CondReconfigId that can be added is 5 to 8;
(7) measurement configuration information configured by the first network side device for a terminal;
(8) a measurement result, where in an implementation, the measurement result is a measurement result reported by a terminal; or
(9) information about one or more CPAC candidate cells that the first network device recommends the second network device to consider for configuring. The CPAC candidate target cell information includes at least one of the following: frequency information; a physical cell identifier; or an execution condition, where a measurement ID indicated in the execution condition is the measurement ID in the MCG measurement configuration or the SCG measurement configuration.

In this embodiment, the handover request message includes CPAC request indication or capability indication information, so that the MR-DC connection can be maintained as much as possible during CHO.

In an embodiment, the handover request message may include at least one of the following:
(1) a measurement result reported by the terminal; or
(2) information about one or more CPAC candidate target cells that the first network device recommends the second network device to consider for configuring. The CPAC candidate target cell information includes at least one of the following: frequency information; a physical cell identifier; or an execution condition, where a measurement ID indicated in the execution condition is the measurement ID in the MCG measurement configuration or the SCG measurement configuration.

In this embodiment, after receiving the handover request message, the second network device may further send a secondary node addition request message to at least one potential target secondary node (Target-SN, T-SN).

In an example, when considering the CPAC candidate cell, the second network device considers only the one or more CPC candidate target cells that the first network side device recommends to consider for configuring in the handover request message.

In another example, the second network device includes, in the secondary node addition request message, CPAC indication information sent by the source node, such as the measurement result and the one or more CPC candidate target cells that the first network side device recommends to consider for configuring.

In this embodiment, the first network side device may recommend the CPAC candidate cell to the second network device through the handover request message, so that the CPAC candidate cell can be configured efficiently without introducing new measurement or excessive CPAC candidate cells.

In an embodiment, the handover request message further includes at least one of the following:
(1) a measurement result reported by the terminal;
(2) the maximum number of at least one of the following that the second network side device is allowed to add: a CPAC candidate SN, a candidate PScell, or a candidate cell; or
(3) measurement configuration information configured by the first network device for a terminal.

In this embodiment, after receiving the handover request message, the second network device may further send a secondary node addition request message to at least one potential target secondary node (Target-SN, T-SN). When considering the CPAC candidate cell, the second network device considers only the one or more CPC candidate target cells that the first network side device recommends to consider for configuring in the handover request message.

In this embodiment, the second network side device may not be allowed to introduce additional measurement, to avoid configuring excessive measurement frequencies beyond a capability of the terminal, thereby improving performance of a communication system.

Optionally, in an embodiment, based on an embodiment 200, the handover request acknowledgement message further includes indication information. The indication information is used for indicating that a CHO candidate cell in the handover request acknowledgement message includes at least one CPAC candidate cell.

In this embodiment, in a case of measurement based on the MCG or SCG, the handover request acknowledgement message includes indication information related to the CPAC candidate cell, to avoid the S-MN and/or the S-SN decoding an inter-node message container.

In this embodiment, in a case of measurement based on the MCG or SCG of the target master node (T-MN), the handover request acknowledgement message indicates whether the CHO candidate cell includes the CPAC candidate cell, so that the S-MN configures the terminal to decode a T-MN measurement configuration in advance to support CPAC evaluation, which is conducive to reducing signaling processing duration and improving efficiency of signaling transmission.

Optionally, the indication information includes at least one of the following:
(1) a CHO indication with CPAC, where the CHO indication with CPAC is used for indicating that the second network side device is configured with a CPAC candidate cell;
(2) at least one target PScell identifier, where the target PScell identifier is used for indicating that a target primary cell of a terminal is configured with a CPAC candidate cell; or
(3) at least one piece of CHO conditional reconfiguration identifier information, where the CHO conditional reconfiguration identifier information is used for indicating that a target primary cell configuration corresponding to a CHO conditional reconfiguration identifier includes at least one CPAC candidate cell.

The method provide in this embodiment further includes: the first network side device sends an RRC reconfiguration message to a terminal, where the RRC reconfiguration message includes conditional reconfiguration information of a CHO candidate cell, and the conditional reconfiguration information of the CHO candidate cell includes at least one of the following:
(1) an execution condition of a CPAC candidate cell, where a measurement ID indicated in the execution condition is a measurement ID in a target MCG measurement configuration;
(2) a conditional reconfiguration identifier of a CPAC candidate cell; or
(3) CPAC indication information, where the CPAC indication information is used for indicating that a configuration of the CHO candidate cell includes at least one CPAC candidate cell.

Optionally, in the RRC reconfiguration message, an RRC reconfiguration message corresponding to the CHO candidate cell includes a target MCG measurement configuration, and the target MCG measurement configuration includes measurement information related to the CPAC candidate cell.

To describe the conditional handover method provided in the embodiments of this application in detail, the following describes the conditional handover method with reference to several specific embodiments.

### Embodiment 1

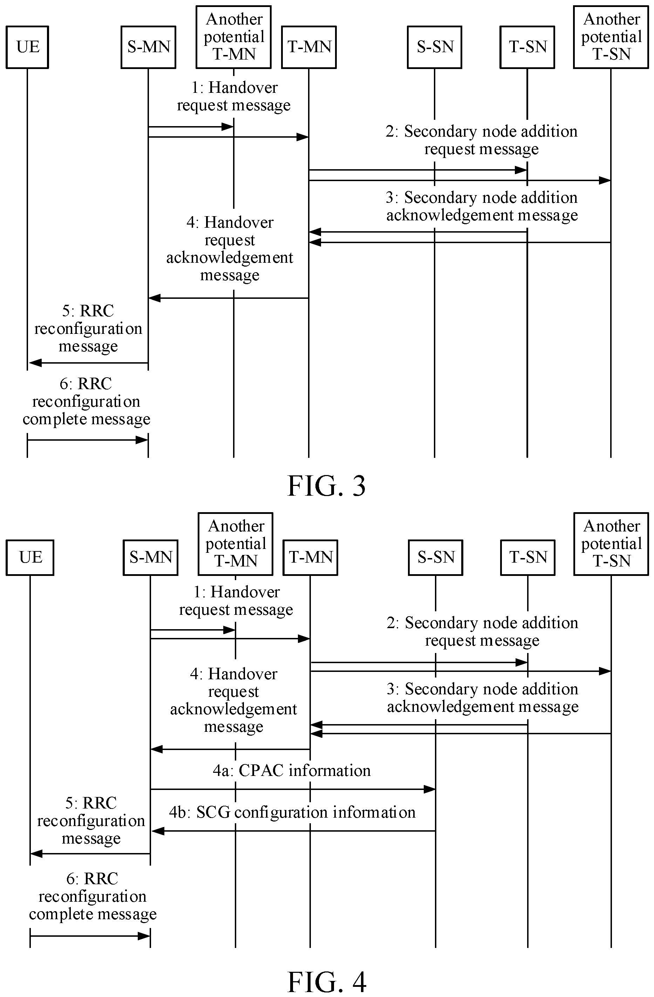

In this embodiment, a terminal performs measurement based on a source MCG (Source MCG). As shown in FIG. 3, this embodiment includes the following steps.

Step 1: A source master node (S-MN) initiates a conditional handover process, and the S-MN sends a handover request (Handover Request) message to at least one potential target master node (T-MN), where the handover request message includes a conditional handover information request information element.

Optionally, the handover request message includes at least one piece of the following CPAC information:
(1) indication information for initiating conditional handover with CPAC or MR-DC, for example, an indication for initiating conditional handover with CPAC (CHOwithCPAC-initiation);
(2) indication information supporting CPAC, to be specific, a conditional handover process initiated by the S-MN supports a candidate cell for conditional handover in carrying a CPAC candidate cell;
(3) indication information supporting MR-DC, to be specific, a conditional handover process initiated by the S-MN supports MR-DC;
(4) indication information supporting a plurality of SCG candidate cells, to be specific, a conditional handover process initiated by the S-MN supports a candidate cell for conditional handover in carrying a plurality of SCG candidate cells;
(5) the maximum number of at least one of the following that the T-MN is allowed to add: a CPAC candidate secondary node (SN), a candidate PScell, or a candidate cell; or
(6) measurement configuration information configured by the source node (such as the S-MN, or the S-MN and the S-SN) for a UE.

Further, the CPAC information is included in the conditional handover information request (Conditional Handover Information Request) information element in the handover request message. Optionally, a value of a conditional handover trigger (CHO Trigger) information element is: an indication of conditional handover with CPAC (CHOwithCPAC-initiation), or an indication of conditional handover with MR-DC (CHO with MR-DC).

An implementation is shown in the following table:

| **IE/Group Name** | Presence | IE type and reference | Semantics description | Criticality | Assigned Criticality |
|---|---|---|---|---|---|
| **Conditional Handover Information Request** | O | | | YES | reject |
| >CHO Trigger | M | ENUMERATED (CHO-initiation, CHO-replace, CHOwithCPAC-initiation,...) | | - | |
| >Target NG-RAN node UE XnAP ID | C-ifCHOmod | NG-RAN node UE XnAP ID 9.2.3.16 | Allocated at the target NG-RAN node | - | |
| >Estimated Arrival Probability | O | INTEGER (1..100) | | - | |

Step 2: The potential target master node (T-MN) receives the handover request message. Optionally, if the handover request message includes the CPAC information, the target master node (T-MN) performs at least one of the following operations:
(1) Initiate CPAC. Specifically, the T-MN sends a secondary node addition request message to at least one potential target secondary node (Target-SN, T-SN). Further, the secondary node addition request message sent to the potential target secondary node carries the measurement configuration information configured by the source node (the S-MN, or the S-MN and the S-SN) for the UE.
(2) A handover request acknowledgement (Handover Request Acknowledge) message sent to the S-MN includes CPAC candidate cell information. For details, refer to step 4.

Step 3: The T-SN sends, to the T-MN, secondary node addition acknowledgement information including at least one CPAC candidate cell configuration.

Step 4: The T-MN feeds back the handover request acknowledgement (Handover Request Acknowledge) message to the S-MN.

The handover request acknowledgement message includes at least one piece of the following CPAC information:
(1) CPAC candidate cell information.

The CPAC candidate cell information includes at least one of the following: frequency information, such as a synchronization signal and PBCH block (Synchronization Signal and PBCH block, SSB) frequency (Frequency); a physical cell identifier (physCellId); or a cell group configuration (CG-Config).

(2) CPAC-related measurement requirement information, such as one or more of the following:
a. a measurement object (MeasObject), including a frequency of the CPAC candidate cell;
b. a measurement report configuration (ReportConfig) or a conditional trigger configuration (CondTriggerConfig), including a measurement event configuration corresponding to a CPAC candidate cell execution condition; or
c. a configuration of a measurement ID (measId). In this embodiment, the measurement ID is associated with an MCG measurement configuration.

The measurement ID is used for associating a measurement object identifier (measObjectId) with a report configuration identifier (reportConfigId).

A measurement configuration associated with the measurement ID includes at least one of the following: the MCG measurement configuration, to be specific, an MCG measurement configuration provided by the source master node S-MN; an SCG measurement configuration, to be specific, an SCG measurement configuration provided by the source secondary node S-SN; or a target MCG measurement configuration, to be specific, a target MCG measurement configuration provided by the target master node T-MN.

Because identifiers corresponding to measurements configured by the S-MN, the S-SN, and the T-MN have a same value range (for example, the value range is 1 to 64), based on a configuration message, the UE can determine a node that configures a measurement object identifier associated with a configured report configuration identifier, to perform radio signal quality measurement on a corresponding measurement object.

For example, a measurement ID configured by the S-MN is 1, and an associated measurement object is F1 (frequency 1); and a measurement ID configured by the S-SN is 1, and an associated measurement object is F2 (frequency 2). The UE needs to explicitly learn, based on the measurement configuration, whether a measurement ID 1 is associated with the F 1 (configured by the S-MN) or the F2 (configured by the S-SN). Therefore, relevant indication information needs to be carried in the "handover request acknowledgement message".

An available indication method includes: the "handover request acknowledgement message" indicates a node that configures the measurement configuration corresponding to the measurement ID. In this embodiment, the measurement ID is associated with the MCG measurement configuration.

(3) CPAC conditional reconfiguration identifier information, including a conditional reconfiguration identifier (condReconfigID) corresponding to at least one CPAC candidate cell associated with the T-MN.

(4) CPAC conditional reconfiguration information.

The CPAC conditional reconfiguration information includes at least one of the following: a conditional reconfiguration identifier (CondReconfigID); an execution condition, where in this embodiment, the terminal considers a measurement ID indicated in the execution condition as the measurement ID in the MCG measurement configuration; or RRC reconfiguration.

Further, the CPAC information is included in a handover command message (for example, an existing HandoverCommand message, or a new handover command message HandoverCommand2) sent by the T-MN to the S-MN and included in the handover request acknowledgement message.

In an implementation, the handover command message is the HandoverCommand2, which carries at least one piece of CPAC information (cpacCandidateList). The handover command message is specifically as follows.

### HandoverCommand2 message

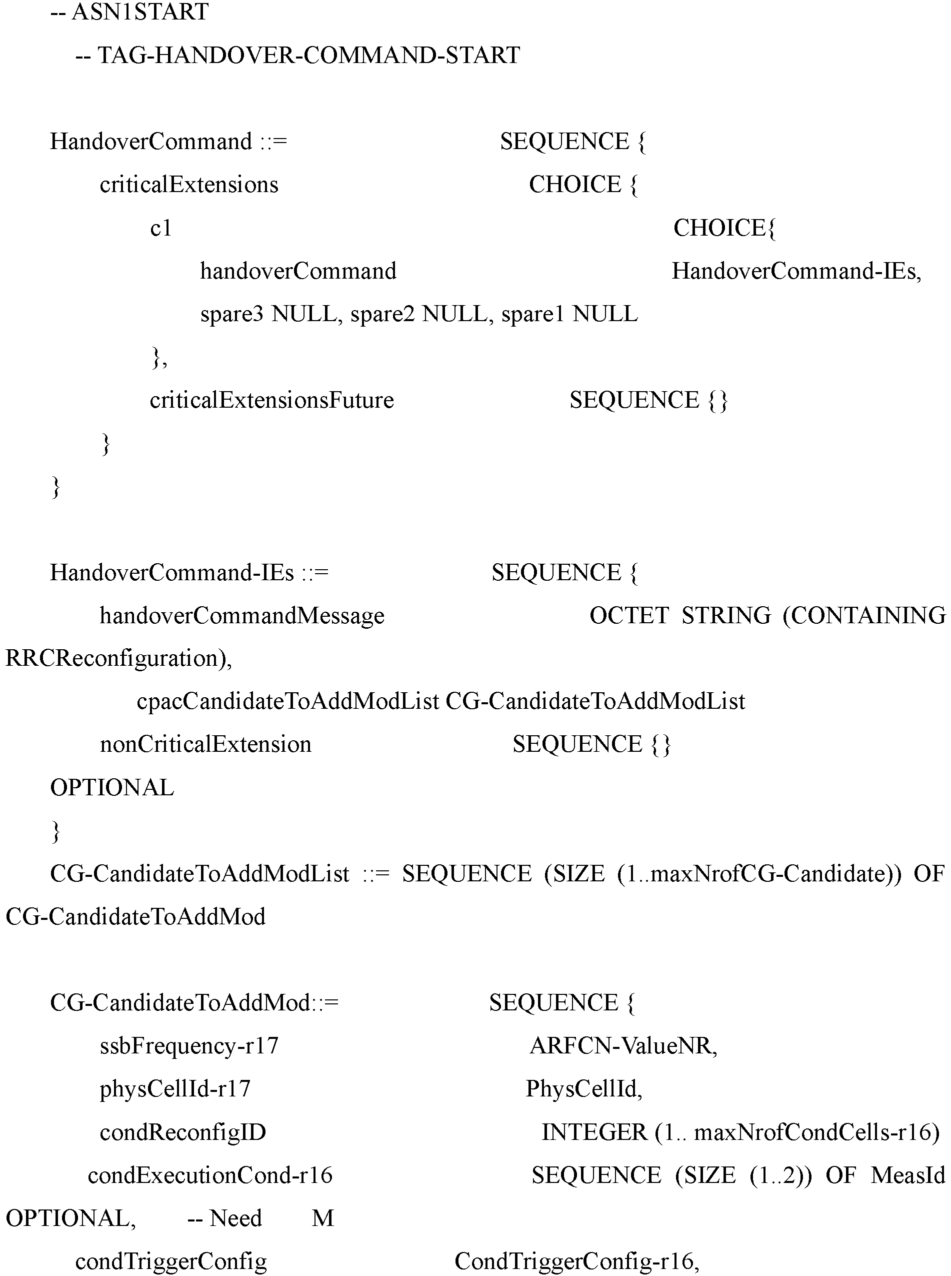

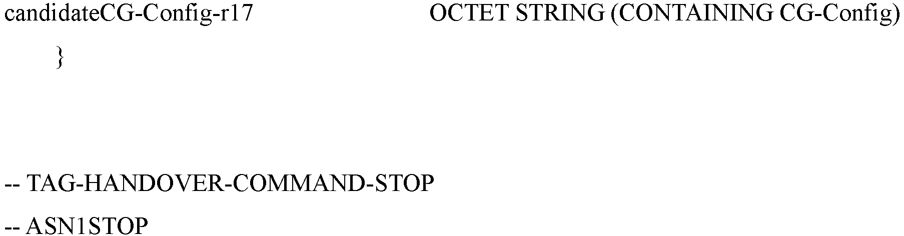

In this embodiment, the S-MN receives the handover request acknowledgement (Handover Request Acknowledge) message. If the handover request acknowledgement message includes the CPAC information, in an RRC reconfiguration message sent by the S-MN to the UE, the MCG measurement configuration includes measurement information related to the CPAC candidate cell, such as the frequency, the measurement object, a conditional measurement event, and the conditional trigger configuration.

Step 5: The S-MN sends an RRC reconfiguration (RRCReconfiguration) message including conditional handover to the UE.

Step 6: The UE sends an RRC reconfiguration complete (RRCReconfigurationComplete) message to the S-MN.

### Embodiment 2

In this embodiment, a terminal performs measurement based on a source SCG (source SCG). As shown in FIG. 4, this embodiment includes the following steps.
Step 1: A source master node S-MN initiates a conditional handover process. Specifically, the source master node S-MN sends a handover request message to at least one potential target master node T-MN. For details, refer to the description of the related step in Embodiment 1.
Step 2: The potential target master node (T-MN) initiates CPAC after receiving the handover request message. Specifically, the T-MN sends a secondary node addition request message to at least one potential target secondary node (Target-SN, T-SN). For details, refer to the description of the related step in Embodiment 1.
Step 3: The target secondary node T-SN sends secondary node addition acknowledgement information to the T-MN, including at least one CPAC candidate cell configuration. For details, refer to the description of the related step in Embodiment 1.
Step 4: The T-MN feeds back a handover request acknowledgement (Handover Request Acknowledge) message to the S-MN. For details, refer to the description of the related step in Embodiment 1.
Step 4a: The S-MN sends the CPAC information (or referred to as CPAC candidate cell information) to the S-SN. For details of the CPAC information, refer to the description of step 4 in Embodiment 1.

Further, if the handover request acknowledgement (Handover Request Acknowledge) message includes the CPAC information, the S-MN sends the CPAC information to the S-SN.

The CPAC information is carried by a secondary node modification request (S-NODE MODIFICATION REQUEST) message.

Step 4b: The S-SN sends SCG configuration information, such as a secondary node modification acknowledgement (S-NODE MODIFICATION REQUEST ACKNOWLEDGE) message, to the S-MN.

If the message sent by the master node (for example, the S-MN) to the secondary node (for example, the S-SN), such as the secondary node modification request (S-NODE MODIFICATION REQUEST) message, includes the CPAC information, the secondary node (for example, the S-SN) includes the SCG measurement configuration in a message sent to the master node (for example, the S-MN), such as the secondary node modification acknowledgement message. The SCG measurement configuration includes the measurement information related to the CPAC candidate cell, to be specific, the measurement frequency, the measurement object, the measurement object, and the like indicated by the CPAC information.

Step 5: The S-MN sends an RRC reconfiguration (RRCReconfiguration) message including conditional handover to the UE.

In the RRC reconfiguration message, the SCG measurement configuration includes measurement information related to the CPAC candidate cell, such as the frequency, the measurement object, the conditional measurement event, and the conditional trigger configuration.

Step 6: The UE sends an RRC reconfiguration complete (RRCReconfigurationComplete) message to the S-MN.

### Embodiment 3

In this embodiment, a terminal performs measurement based on a source node (an S-MN, or the S-MN and an S-SN), and the source node (the S-MN, or the S-MN and the S-SN) determines a range of a CPAC candidate cell. As shown in FIG. 3, this embodiment includes the following steps.

Step 1: The source master node S-MN initiates a conditional handover process. Specifically, the source master node S-MN sends a handover request message to at least one potential target master node T-MN. The handover request message includes a conditional handover information request information element.

Based on step 1 in Embodiment 1, further, optionally, the handover request message includes at least one piece of the following CPAC indication information:
(1) a measurement result reported by the UE to the source node (the S-MN, or the S-MN and the S-SN), or
(2) one or more CPC candidate target cells that the source node (the S-MN and/or the S-SN) recommends the target node (the T-MN and/or the T-SN) to consider for configuring, including at least one of the following information: frequency information, such as SSB Frequency; a physical cell identifier; or an execution condition, the terminal considering the measurement ID indicated in the execution condition as the measurement ID in the MCG measurement configuration or in the SCG measurement configuration.

Step 2: The potential target master node (T-MN) receives the handover request message, and the target master node T-MN sends a secondary node addition request message to at least one potential target secondary node (Target-SN, T-SN).

In an example, when considering the CPAC candidate cell, the T-MN only considers one or more CPC candidate target cells that the source node (the S-MN and/or the S-SN) recommends the target node (the T-MN and/or the T-SN) to consider for configuring in the handover request message.

In another example, the T-MN includes, in the secondary node addition request message, the CPAC indication information sent by the source node, such as the measurement result, and one or more CPC candidate cells that the source node (the S-MN and/or the S-SN) recommends the target node (the T-MN and/or the T-SN) to consider for configuring.

Step 3: The target secondary node T-SN sends secondary node addition acknowledgement information to the T-MN, including at least one CPAC candidate cell configuration.

Step 4: The T-MN feeds back a handover request acknowledgement message to the S-MN.

Based on Embodiment 1, further, the handover request acknowledgement message includes at least one piece of the following CPAC information:
(1) CPAC candidate cell information, including at least one of the following: frequency information, such as SSB Frequency; a physical cell identifier; or a cell group configuration (CG-Config).
(2) CPAC conditional reconfiguration identifier information, including a conditional reconfiguration identifier (condReconfigID) corresponding to at least one CPAC candidate cell associated with the T-MN.
(3) CPAC conditional reconfiguration information.

The CPAC conditional reconfiguration information includes at least one of the following: a conditional reconfiguration identifier (CondReconfigID); an execution condition, the terminal considering the measurement ID indicated in the execution condition as the measurement ID in the MCG measurement configuration or in the SCG measurement configuration; or RRC reconfiguration.

Further, the CPAC information is included in a handover command message (for example, an existing HandoverCommand message, or a new handover command message HandoverCommand2) sent by the T-MN to the S-MN and included in the handover request acknowledgement message.

Step 5: The S-MN receives the handover request acknowledgement message, and the S-MN sends an RRC reconfiguration (RRCReconfiguration) message including conditional handover to the UE.

Step 6: The UE sends an RRC reconfiguration complete (RRCReconfigurationComplete) message to the source node.

### Embodiment 4

In this embodiment, a terminal performs measurement based on a source node, and does not allow a T-MN to introduce additional measurement for a CPAC configuration. As shown in FIG. 3, this embodiment includes the following steps:

Step 1: A source master node S-MN initiates a conditional handover process. For example, the source master node S-MN sends a handover request message to at least one potential target master node T-MN. The handover request message includes a conditional handover information request information element.

Based on step 1 in Embodiment 1, optionally, the handover request message includes at least one piece of the following CPAC indication information:
(1) a measurement result reported by the UE to the source node (the S-MN, or the S-MN and the S-SN);
(2) the maximum number of at least one of the following that the T-MN is allowed to add: a CPAC candidate SN, a candidate PScell, or a candidate cell; or
(3) measurement configuration information configured by the source node (the S-MN, or the S-MN and the S-SN) for a UE.

Step 2: The potential target master node (T-MN) receives the handover request message. For details, refer to the description of the related step in Embodiment 1. The target master node T-MN sends a secondary node addition request message to at least one potential target secondary node (Target-SN, T-SN).

In this embodiment, when considering the CPAC candidate cells, the T-MN considers only a frequency and/or a cell included in the measurement configuration information configured for the UE by the source node (the S-MN, or the S-MN and the S-SN) in the handover request message.

Step 3: The target secondary node T-SN sends secondary node addition acknowledgement information to the T-MN, including at least one CPAC candidate cell configuration.

Step 4: The T-MN feeds back a handover request acknowledgement message to the S-MN, and the S-MN receives the handover request acknowledgement message. For details, refer to the description of the related step in Embodiment 1.

Step 5: The S-MN sends an RRC reconfiguration (RRCReconfiguration) message including conditional handover to the UE.

Step 6: The UE sends an RRC reconfiguration complete (RRCReconfigurationComplete) message to the source node.

### Embodiment 5

In this embodiment, a terminal performs measurement based on a target MCG (Target MCG). Optionally, a CPAC indication is used for decoding a configuration message in advance sent by a T-MN. As shown in FIG. 3, this embodiment includes the following steps:
Step 1: A source master node S-MN initiates a conditional handover process. For example, the source master node S-MN sends a handover request message to at least one potential target master node T-MN. For details, refer to the description of the related step in Embodiment 1.

Optionally, the handover request message includes: the maximum number of at least one of the following that the T-MN is allowed to add: a CPAC candidate SN, a candidate PScell, or a candidate cell.

Step 2: The potential target master node (T-MN) initiates CPAC after receiving the handover request message. Specifically, the T-MN sends a secondary node addition request to at least one potential target secondary node (Target-SN, T-SN). For details, refer to the description of the related step in Embodiment 1.

Step 3: The target secondary node T-SN sends secondary node addition acknowledgement information to the T-MN, including at least one CPAC candidate cell configuration. For details, refer to the description of the related step in Embodiment 1.

If the secondary node addition acknowledgement information includes at least one accepted CPAC candidate cell, the T-MN includes, in the RRC reconfiguration corresponding to the CHO candidate cell, a measurement configuration for the at least one accepted CPAC candidate cell, such as a frequency, a measurement object, a conditional measurement event, or a conditional trigger configuration.

Step 4: The T-MN feeds back a handover request acknowledgement (Handover Request Acknowledge) message to the S-MN.

Optionally, the handover request acknowledgement message includes CHO indication information with CPAC (CHOwithCPAC), used for indicating that the at least one CHO candidate cell in the handover request acknowledgement message includes at least one CPAC candidate cell. The CHOwithCPAC indication information includes at least one of the following:
(1) a CHOwithCPAC indication, indicating that the T-MN is configured with a CPAC candidate cell;
(2) at least one target PScell identifier, indicating that a target primary cell of the terminal is configured with a CPAC candidate cell; or
(3) at least one piece of CHO conditional reconfiguration identifier information, where the CHO conditional reconfiguration identifier information is used for indicating that a target primary cell configuration corresponding to a CHO conditional reconfiguration identifier includes at least one CPAC candidate cell.

Further, the CHOwithCPAC indication information is included in at least one of the following messages: (1) a handover command message (for example, HandoverCommand message) sent by the T-MN to the S-MN included in the handover request acknowledgement message, or (2) a conditional handover information acknowledgement information element (Conditional Handover Information Acknowledge IE) in handover request acknowledgement (Handover Request Acknowledge).

Step 5: The S-MN sends an RRC reconfiguration (RRCReconfiguration) message including conditional handover to the UE.

Optionally, if the handover request acknowledgement message includes the CHOwithCPAC indication information, the conditional reconfiguration information of the CHO candidate cell in the RRC reconfiguration message sent by the S-MN to the UE includes at least one piece of the following CPAC information:
(1) execution conditions of one or more CPAC candidate cells, where the terminal considers a measurement ID indicated in the execution condition as the measurement ID in the target MCG measurement configuration;
(2) a conditional reconfiguration identifier of a CPAC candidate cell; or
(3) CPAC indication information, indicating that the CHO candidate cell configuration includes at least one CPAC candidate cell.

The foregoing operations facilitate decoding of the T-MN configuration in advance to the UE, to obtain the conditional reconfiguration information and the measurement configuration information related to the CPAC.

In the RRC reconfiguration message, the MCG measurement configuration in RRC reconfiguration information corresponding to the CHO candidate cell includes the measurement information related to the CPAC candidate cell such as the frequency, the measurement object, the conditional measurement event, and the conditional trigger configuration.

Step 6: The UE sends an RRC reconfiguration complete (RRCReconfigurationComplete) message to the source node.

### Embodiment 6

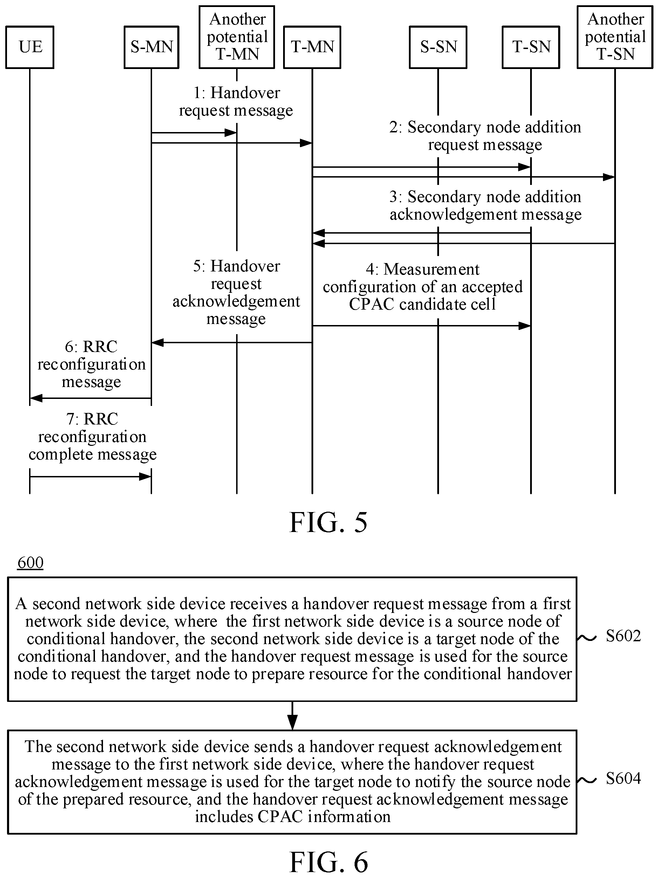

In this embodiment, a terminal performs measurement based on an SCG in CHO configured by a target master node (target-MN). As shown in FIG. 5, this embodiment includes the following steps:
Step 1: A source master node S-MN initiates a conditional handover process. For example, the source master node S-MN sends a handover request message to at least one potential target master node T-MN. For details, refer to the description of the related step in Embodiment 1.
Step 2: After receiving the handover request message, the potential target master node (T-MN) initiates CPAC. For example, the T-MN sends a secondary node addition request to at least one potential target secondary node (Target-SN, T-SN). For details, refer to the introduction in the related step in Embodiment 1.
Step 3: The target secondary node T-SN sends secondary node addition acknowledgement information to the T-MN, including at least one CPAC candidate cell configuration. For details, refer to the description of the related step in Embodiment 1.
Step 4: If the secondary node addition acknowledgement information includes at least one accepted CPAC candidate cell, the T-MN notifies the T-SN that RRC reconfiguration of a target PScell corresponding to a CHO candidate cell includes a measurement configuration for the at least one accepted CPAC candidate cell, such as a frequency, a measurement object, a conditional measurement event, or a conditional trigger configuration.
Step 5: The T-MN feeds back a handover request acknowledgement Handover Request Acknowledge message to the S-MN. For details, refer to the description of the related step in Embodiment 3.
Step 6: The S-MN sends an RRC reconfiguration (RRCReconfiguration) message including conditional handover to the UE. For details, refer to the introduction of the related step in Embodiment 3.

In the RRC reconfiguration message, the SCG measurement configuration in RRC reconfiguration information corresponding to the CHO candidate cell includes the measurement information related to the CPAC candidate cell such as the frequency, the measurement object, the conditional measurement event, and the conditional trigger configuration.

Step 7: The UE sends an RRC reconfiguration complete (RRCReconfigurationComplete) message to the source node.

The conditional handover method according to the embodiments of this application is described in detail above with reference to FIG. 2 to FIG. 5. A conditional handover method according to another embodiment of this application is described in detail below with reference to FIG. 6. It may be understood that, descriptions of the second network side device are the same as or correspond to the descriptions of the first network side device in the method shown in FIG. 2. To avoid repetition, related descriptions are appropriately omitted.

FIG. 6 is a schematic flowchart of an implementation of a conditional handover method according to an embodiment of this application, which may be applied to a second network side device. As shown in FIG. 6, the method 600 includes the following steps.

S602: A second network side device receives a handover request message from a first network side device, where the first network side device is a source node of conditional handover, the second network side device is a target node of the conditional handover, and the handover request message is used for the source node to request the target node to prepare resource for the conditional handover.

S604: The second network side device sends a handover request acknowledgement message to the first network side device, where the handover request acknowledgement message is used for the target node to notify the source node of the prepared resource, and the handover request acknowledgement message includes CPAC information.

In this embodiment of this application, the second network side device receives the handover request message from the first network side device. The second network side device sends the handover request acknowledgement message to the first network side device. The handover request acknowledgement message includes the CPAC information. Because the handover request acknowledgement message includes the CPAC information, it is convenient to provide a terminal with a candidate cell configuration used for the CPAC, and it is further conducive to including a plurality of CPAC candidate cells in the conditional handover CHO.

Optionally, in an embodiment, the CPAC information includes at least one of the following: (1) CPAC candidate cell information; (2) CPAC-related measurement requirement information; (3) CPAC conditional reconfiguration identifier information, where the CPAC conditional reconfiguration identifier information includes a conditional reconfiguration identifier corresponding to at least one CPAC candidate cell prepared by the second network side device; or (4) CPAC conditional reconfiguration information, where the CPAC conditional reconfiguration information includes at least one of the following: a conditional reconfiguration identifier; an execution condition; or RRC reconfiguration.

Optionally, in an embodiment, the CPAC-related measurement requirement information includes at least one of the following: (1) a measurement object, where the measurement object includes frequency information about measuring a CPAC candidate cell; (2) a measurement report configuration; (3) a conditional trigger configuration, where the conditional trigger configuration includes a measurement event configuration corresponding to an execution condition of a CPAC candidate cell; or (4) a configuration of a measurement ID, where a measurement configuration associated with the measurement ID includes at least one of the following: an MCG measurement configuration, an SCG measurement configuration, or a target MCG measurement configuration.

Optionally, in an embodiment, the measurement configuration associated with the measurement ID is the MCG measurement configuration, and the method further includes: the second network side device initiates the CPAC, and/or the handover request acknowledgement message includes the CPAC candidate cell information.

Optionally, in an embodiment, the handover request message includes at least one of the following: (1) indication information used for indicating initiating conditional handover with CPAC or MR-DC; (2) indication information used for indicating supporting CPAC; (3) indication information used for indicating supporting MR-DC; (4) indication information used for indicating supporting a plurality of SCG candidate cells; (5) the maximum number of at least one of the following that the second network side device is allowed to add: a CPAC candidate SN, a candidate PScell, or a candidate cell; (6) a range of a conditional reconfiguration identifier (CondReconfigId) that the second network side device is allowed to add; (7) measurement configuration information configured by the first network side device for a terminal; (8) a measurement result; or (9) information about one or more CPAC candidate cells that the first network device recommends the second network device to consider for configuring.

Optionally, in an embodiment, the method further includes: the second network side device sends a secondary node addition request message to a fourth network side device, where the fourth network side device is a target secondary node of the conditional handover. When considering the CPAC candidate cell, the second network device considers only the one or more CPC candidate target cells recommended by the first network device in the handover request message; or the secondary node addition request message includes CPAC information sent by the first network side device; or when considering the CPAC candidate cell, the second network device considers only a frequency and/or a cell included in the measurement configuration information configured by the first network device for a terminal in the handover request message; or when considering the CPAC candidate cells, the second network device considers only a frequency and/or a cell included in a measurement result in the handover request message.

Optionally, in an embodiment, the handover request acknowledgement message further includes indication information. The indication information is used for indicating that the CHO candidate cell in the handover request acknowledgement message includes at least one CPAC candidate cell.

Optionally, in an embodiment, the indication information includes at least one of the following: (1) a CHO indication with CPAC, where the CHO indication with CPAC is used for indicating that the second network side device is configured with a CPAC candidate cell; (2) at least one target PScell identifier, where the target PScell identifier is used for indicating that a target primary cell of a terminal is configured with a CPAC candidate cell; or (3) at least one piece of CHO conditional reconfiguration identifier information, where the CHO conditional reconfiguration identifier information is used for indicating that a target primary cell configuration corresponding to a CHO conditional reconfiguration identifier includes at least one CPAC candidate cell.

Optionally, in an embodiment, the method further includes: the second network side device sends a secondary node addition request message to a fourth network side device, where the fourth network side device is a target secondary node of the conditional handover; and the second network side device receives secondary node addition acknowledgement information from the fourth network side device.

Optionally, in an embodiment, the method further includes: the second network side device performs one of the following if the secondary node addition acknowledgement information includes at least one accepted CPAC candidate cell: (1) RRC reconfiguration corresponding to the CHO candidate cell including a measurement configuration of the at least one accepted CPAC candidate cell; or (2) notifying, by the second network side device, the fourth network side device that RRC reconfiguration of the target PScell corresponding to the CHO candidate cell includes a measurement configuration of the at least one accepted CPAC candidate cell.

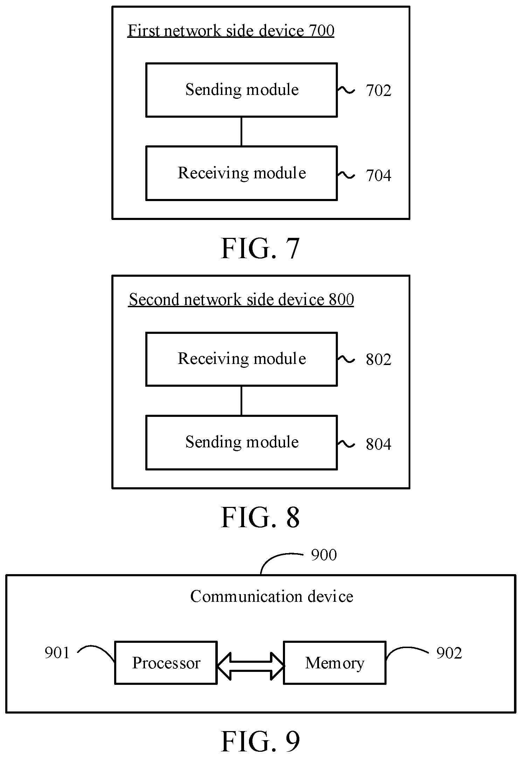

FIG. 7 is a schematic structural diagram of a first network side device according to an embodiment of this application. As shown in FIG. 7, a first network side device 700 includes the following modules.

A sending module 702 is configured to send a handover request message to a second network side device. The first network side device is a source node of conditional handover, the second network side device is a target node of the conditional handover, and the handover request message is used for the source node to request the target node to prepare resource for the conditional handover.

A receiving module 704 is configured to receive a handover request acknowledgement message from the second network side device. The handover request acknowledgement message is used for the target node to notify the source node of the prepared resource, and the handover request acknowledgement message includes CPAC information.

In the embodiments of this application, a first network side device sends a handover request message to a second network side device. The first network side device receives a handover request acknowledgement message from the second network side device. The handover request acknowledgement message includes CPAC information. Since the handover request acknowledgement message includes the CPAC information, it is convenient to provide a terminal with a candidate cell configuration used for CPAC, and it is further conducive to including a plurality of CPAC candidate cells in conditional handover CHO.

Optionally, in an embodiment, the CPAC information includes at least one of the following: (1) CPAC candidate cell information; (2) CPAC-related measurement requirement information; (3) CPAC conditional reconfiguration identifier information, where the CPAC conditional reconfiguration identifier information includes a conditional reconfiguration identifier corresponding to at least one CPAC candidate cell prepared by the second network side device; or (4) CPAC conditional reconfiguration information, where the CPAC conditional reconfiguration information includes at least one of the following: a conditional reconfiguration identifier; an execution condition, or RRC reconfiguration.

Optionally, in an embodiment, the CPAC candidate cell information includes at least one of the following: frequency information; a physical cell identifier; or a cell group configuration.

Optionally, in an embodiment, the CPAC-related measurement requirement information includes at least one of the following: (1) a measurement object, where the measurement object includes frequency information about measuring a CPAC candidate cell; (2) a measurement report configuration; (3) a conditional trigger configuration, where the conditional trigger configuration includes a measurement event configuration corresponding to an execution condition of a CPAC candidate cell; or (4) a configuration of a measurement identifier ID, where a measurement configuration associated with the measurement ID includes at least one of the following: a master cell group MCG measurement configuration, a secondary cell group SCG measurement configuration, or a target MCG measurement configuration.

Optionally, in an embodiment, the measurement configuration associated with the measurement ID is the MCG measurement configuration. The sending module 702 is further configured to send an RRC reconfiguration message to the terminal. The RRC reconfiguration message includes the MCG measurement configuration, and the MCG measurement configuration includes measurement information related to the CPAC candidate cell.

Optionally, in an embodiment, the sending module 702 is further configured to send the CPAC information to a third network side device. The third network side device is a source secondary node of the conditional handover. The receiving module 704 is further configured to receive an SCG measurement configuration from the third network side device. The SCG measurement configuration includes measurement information of a CPAC candidate cell.

Optionally, in an embodiment, the sending module 702 is configured to send, if the handover request acknowledgement message includes the CPAC information, the CPAC information to the third network side device, and/or the CPAC information sent by the sending module 702 is carried by the secondary node modification request message.

Optionally, in an embodiment, the sending module 702 is further configured to send an RRC reconfiguration message to the terminal. The RRC reconfiguration message includes the SCG measurement configuration, and the SCG measurement configuration includes measurement information related to the CPAC candidate cell.

Optionally, in an embodiment, the handover request message includes at least one of the following: (1) indication information used for indicating initiating conditional handover with CPAC or MR-DC; (2) indication information used for indicating supporting CPAC; (3) indication information used for indicating supporting MR-DC; (4) indication information used for indicating supporting a plurality of SCG candidate cells; (5) the maximum number of at least one of the following that the second network side device is allowed to add: a CPAC candidate SN, a candidate PScell, or a candidate cell; (6) a range of a conditional reconfiguration identifier (CondReconfigId) that the second network side device is allowed to add; (7) measurement configuration information configured by the first network side device for a terminal; (8) a measurement result; or (9) information about one or more CPAC candidate cells that the first network device recommends the second network device to consider for configuring.

Optionally, in an embodiment, the CPAC candidate target cell information includes at least one of the following: (1) frequency information; (2) a physical cell identifier; or (3) an execution condition. A measurement ID indicated in the execution condition is the measurement ID in the MCG measurement configuration or the SCG measurement configuration.

Optionally, in an embodiment, the handover request acknowledgement message further includes indication information. The indication information is used for indicating that the CHO candidate cell in the handover request acknowledgement message includes at least one CPAC candidate cell.

Optionally, in an embodiment, the indication information includes at least one of the following: (1) a CHO indication with CPAC, where the CHO indication with CPAC is used for indicating that the second network side device is configured with a CPAC candidate cell; (2) at least one target PScell identifier, where the target PScell identifier is used for indicating that a target primary cell of a terminal is configured with a CPAC candidate cell; or (3) at least one piece of CHO conditional reconfiguration identifier information, where the CHO conditional reconfiguration identifier information is used for indicating that a target primary cell configuration corresponding to a CHO conditional reconfiguration identifier includes at least one CPAC candidate cell.

Optionally, in an embodiment, the sending module 702 is further configured to send an RRC reconfiguration message to the terminal. The RRC reconfiguration message includes conditional reconfiguration information of the CHO candidate cell, and the conditional reconfiguration information of the CHO candidate cell includes at least one of the following: (1) an execution condition of a CPAC candidate cell, where a measurement ID indicated in the execution condition is a measurement ID in a target MCG measurement configuration; (2) a conditional reconfiguration identifier of a CPAC candidate cell; or (3) CPAC indication information, where the CPAC indication information is used for indicating that a configuration of the CHO candidate cell includes at least one CPAC candidate cell.

Optionally, in an embodiment, in the RRC reconfiguration message, an RRC reconfiguration message corresponding to the CHO candidate cell includes a target MCG measurement configuration, and the target MCG measurement configuration includes measurement information related to the CPAC candidate cell.

The first network side device 700 according to this embodiment of this application may refer to a procedure corresponding to the method 200 according to the embodiments of this application. In addition, the units/modules in the first network side device 700 and the other operations and/or functions above are respectively intended to implement corresponding procedures in the method 200, and the same or equivalent technical effects can be achieved. For brevity, details are not described herein.

FIG. 8 is a schematic structural diagram of a second network side device according to an embodiment of this application. As shown in FIG. 8, a second network side device 800 includes the following modules.

A receiving module 802 is configured to receive a handover request message from a first network side device. The first network side device is a source node of conditional handover, the second network side device is a target node of the conditional handover, and the handover request message is used for the source node to request the target node to prepare resource for the conditional handover.

a sending module 804 is configured to send a handover request acknowledgement message to the first network side device. The handover request acknowledgement message is used for the target node to notify the source node of the prepared resource, and the handover request acknowledgement message includes CPAC information.

In this embodiment of this application, the second network side device receives the handover request message from the first network side device. The second network side device sends the handover request acknowledgement message to the first network side device. The handover request acknowledgement message includes the CPAC information. Because the handover request acknowledgement message includes the CPAC information, it is convenient to provide a terminal with a candidate cell configuration used for the CPAC, and it is further conducive to including a plurality of CPAC candidate cells in the conditional handover CHO.

Optionally, in an embodiment, the CPAC information includes at least one of the following: (1) CPAC candidate cell information; (2) CPAC-related measurement requirement information; (3) CPAC conditional reconfiguration identifier information, where the CPAC conditional reconfiguration identifier information includes a conditional reconfiguration identifier corresponding to at least one CPAC candidate cell prepared by the second network side device; or (4) CPAC conditional reconfiguration information, where the CPAC conditional reconfiguration information includes at least one of the following: a conditional reconfiguration identifier; an execution condition; or RRC reconfiguration.

Optionally, in an embodiment, the CPAC-related measurement requirement information includes at least one of the following: (1) a measurement object, where the measurement object includes frequency information about measuring a CPAC candidate cell; (2) a measurement report configuration; (3) a conditional trigger configuration, where the conditional trigger configuration includes a measurement event configuration corresponding to an execution condition of a CPAC candidate cell; or (4) a configuration of a measurement ID, where a measurement configuration associated with the measurement ID includes at least one of the following: an MCG measurement configuration, an SCG measurement configuration, or a target MCG measurement configuration.

Optionally, in an embodiment, the measurement configuration associated with the measurement ID is the MCG measurement configuration. The sending module 804 is further configured to initiate CPAC, and/or the handover request acknowledgement message includes the CPAC candidate cell information.

Optionally, in an embodiment, the handover request message includes at least one of the following: (1) indication information used for indicating initiating conditional handover with CPAC or MR-DC; (2) indication information used for indicating supporting CPAC; (3) indication information used for indicating supporting MR-DC; (4) indication information used for indicating supporting a plurality of SCG candidate cells; (5) the maximum number of at least one of the following that the second network side device is allowed to add: a CPAC candidate SN, a candidate PScell, or a candidate cell; (6) a range of conditional reconfiguration identifier (CondReconfigId) that the second network side device is allowed to add; (7) measurement configuration information configured by the first network side device for a terminal; (8) a measurement result; or (9) information about one or more CPAC candidate cells that the first network device recommends the second network device to consider for configuring.

Optionally, in an embodiment, the sending module 804 is further configured to send a secondary node addition request message to a fourth network side device. The fourth network side device is a target secondary node of the conditional handover. When considering the CPAC candidate cell, the second network device considers only the one or more CPC candidate target cells recommended by the first network device in the handover request message; or the secondary node addition request message includes CPAC information sent by the first network side device; or when considering the CPAC candidate cell, the second network device considers only a frequency and/or a cell included in the measurement configuration information configured by the first network device for a terminal in the handover request message; or when considering the CPAC candidate cells, the second network device considers only a frequency and/or a cell included in a measurement result in the handover request message.

Optionally, in an embodiment, the handover request acknowledgement message further includes indication information. The indication information is used for indicating that the CHO candidate cell in the handover request acknowledgement message includes at least one CPAC candidate cell.

Optionally, in an embodiment, the indication information includes at least one of the following: (1) a CHO indication with CPAC, where the CHO indication with CPAC is used for indicating that the second network side device is configured with a CPAC candidate cell; (2) at least one target PScell identifier, where the target PScell identifier is used for indicating that a target primary cell of a terminal is configured with a CPAC candidate cell; or (3) at least one piece of CHO conditional reconfiguration identifier information, where the CHO conditional reconfiguration identifier information is used for indicating that a target primary cell configuration corresponding to a CHO conditional reconfiguration identifier includes at least one CPAC candidate cell.

Optionally, in an embodiment, the sending module 804 is further configured to send a secondary node addition request message to a fourth network side device. The fourth network side device is a target secondary node of the conditional handover. The receiving module 802 is further configured to receive secondary node addition acknowledgement information from the fourth network side device.

Optionally, in an embodiment, if the secondary node addition acknowledgement information includes at least one accepted CPAC candidate cell, the sending module 804 is further configured to perform one of the following: (1) RRC reconfiguration corresponding to the CHO candidate cell including a measurement configuration of the at least one accepted CPAC candidate cell; or (2) notifying the fourth network side device that RRC reconfiguration of the target PScell corresponding to the CHO candidate cell includes a measurement configuration of the at least one accepted CPAC candidate cell.

The second network side device 800 according to this embodiment of this application may refer to a procedure corresponding to the method 600 in the embodiments of this application. In addition, the units/modules in the second network side device 800 and the other operations and/or functions above are respectively intended to implement corresponding procedures in the method 600, and the same or equivalent technical effects can be achieved. For brevity, details are not described herein.

Optionally, as shown in FIG. 9, an embodiment of this application further provides a communication device 900, including a processor 901 and a memory 902. The memory 902 stores a program or instructions executable on the processor 901. For example, when the communication device 900 is a network side device (for example, a first network side device or a second network side device), the program or the instructions, when executed by the processor 901, implement the steps of the embodiments of the conditional handover method, and the same technical effect can be achieved. To avoid repetition, details are not described herein again.

An embodiment of this application further provides a first network side device, including a processor and a communication interface. The communication interface is configured to send a handover request message to a second network side device, where the first network side device is a source node of conditional handover, the second network side device is a target node of the conditional handover, and the handover request message is used for the source node to request the target node to prepare resource for the conditional handover; and receive a handover request acknowledgement message from the second network side device, where the handover request acknowledgement message is used for the target node to notify the source node of the prepared resource, and the handover request acknowledgement message includes CPAC information.

An embodiment of this application further provides a second network side device, including a processor and a communication interface. The communication interface is configured to receive a handover request message from a first network side device, where the first network side device is a source node of conditional handover, the second network side device is a target node of the conditional handover, and the handover request message is used for the source node to request the target node to prepare resource for the conditional handover; and send a handover request acknowledgement message to the first network side device, where the handover request acknowledgement message is used for the target node to notify the source node of the prepared resource, and the handover request acknowledgement message includes CPAC information.

This embodiment of the network side device (for example, the first network side device or the second network side device) corresponds to the foregoing method embodiments of the network side device. Implementation processes and implementations of the foregoing method embodiments may all be applied to this network side device embodiment, and the same technical effects can be achieved.

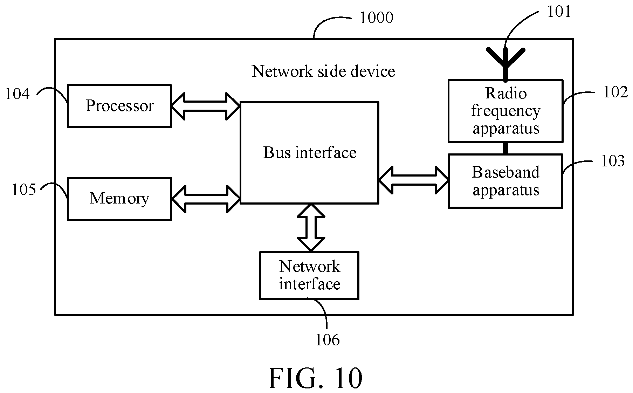

Specifically, an embodiment of this application further provides a network side device. As shown in FIG. 10, a network side device 1000 includes: an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101, and sends the received information to the baseband apparatus 103 for processing. In a downlink direction, the baseband apparatus 103 processes information to be sent and sends the information to the radio frequency apparatus 102. The radio frequency apparatus 102 processes the received information and sends out the information through the antenna 101.

The method performed by the network side device in the foregoing embodiments may be implemented in the baseband apparatus 103. The baseband apparatus 103 includes a baseband processor.

The baseband apparatus 103 may include, for example, at least one baseband board. A plurality of chips are disposed on the baseband board. As shown in FIG. 10, one chip is, for example, the baseband processor, and is connected to a memory 105 through a bus interface, to invoke a program in the memory 105 to perform operations of a network device shown in the foregoing method embodiments.

The network side device may further include a network interface 106. The interface is, for example, a common public radio interface (common public radio interface, CPRI).

Specifically, the network side device 1000 in this embodiment of the present invention further includes: instructions or a program stored in the memory 105 and executable on the processor 104. The processor 104 invokes the instructions or the program in the memory 105 to perform the method performed by the modules shown in FIG. 7 or FIG. 8, and achieves the same technical effect. To avoid repetition, details are not described herein again.

An embodiment of this application further provides a readable storage medium. The readable storage medium stores a program or instructions. The program or the instructions, when executed by a processor, implement the processes of the embodiments of the conditional handover method, and the same technical effect can be achieved. To avoid repetition, details are not described herein again.

The processor is a processor in the terminal described in the foregoing embodiments. The readable storage medium includes a computer-readable storage medium, such as a computer read-only memory (Read Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to execute a program or instructions, to implement the processes of the embodiments of the conditional handover method, and the same technical effect can be achieved. To avoid repetition, details are not described herein again.

It should be understood that the chip mentioned in this embodiment of this application may also be referred to as a system-level chip, a system chip, a chip system, a system on a chip, or the like.

An embodiment of this application further provides a computer program/program product. The computer program/program product is stored in a storage medium. The computer program/program product is executed by at least one processor, to implement the processes of the embodiments of the conditional handover method, and the same technical effect can be achieved. To avoid repetition, details are not described herein again.

An embodiment of this application further provides a conditional handover system, including: a terminal and a network side device. The terminal may be configured to perform the steps of the conditional handover method described above, and the network side device may be configured to perform the steps of the conditional handover method described above.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one......" does not exclude that there are still other same elements in the processes, methods, objects, or apparatuses. In addition, it should be noted that the scope of the method and apparatus in the implementations of this application is not limited to performing functions in the order shown or discussed, and may further include performing functions in a substantially simultaneous manner or in a reverse order according to the functions involved. For example, the described methods may be performed in an order different from the described order, and various steps may be added, omitted, or combined. In addition, features described in some examples may be combined in other examples.

Through the descriptions of the foregoing implementations, a person skilled in the art may clearly understand that the method according to the foregoing embodiments may be implemented through software and a necessary general hardware platform, and certainly, may alternatively be implemented through hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. This application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A conditional handover method, comprising:
sending, by a first network side device, a handover request message to a second network side device, wherein the first network side device is a source node of conditional handover, the second network side device is a target node of the conditional handover, and the handover request message is used for the source node to request the target node to prepare resource for the conditional handover; and
receiving, by the first network side device, a handover request acknowledgement message from the second network side device, wherein the handover request acknowledgement message is used for the target node to notify the source node of the prepared resource, and the handover request acknowledgement message comprises conditional PScell addition or change CPAC information.

2. The method according to claim 1, wherein the CPAC information comprises at least one of the following:
CPAC candidate cell information;
CPAC-related measurement requirement information;
CPAC conditional reconfiguration identifier information, wherein the CPAC conditional reconfiguration identifier information comprises a conditional reconfiguration identifier corresponding to at least one CPAC candidate cell prepared by the second network side device; or
CPAC conditional reconfiguration information, wherein the CPAC conditional reconfiguration information comprises at least one of the following: a conditional reconfiguration identifier; an execution condition; or radio resource control RRC reconfiguration.

3. The method according to claim 2, wherein the CPAC candidate cell information comprises at least one of the following: frequency information; a physical cell identifier; or a cell group configuration.

4. The method according to claim 2, wherein the CPAC-related measurement requirement information comprises at least one of the following:
a measurement object, wherein the measurement object comprises frequency information about measuring a CPAC candidate cell;
a measurement report configuration;
a conditional trigger configuration, wherein the conditional trigger configuration comprises a measurement event configuration corresponding to an execution condition of a CPAC candidate cell; or
a configuration of a measurement identifier ID, wherein a measurement configuration associated with the measurement ID comprises at least one of the following: a master cell group MCG measurement configuration, a secondary cell group SCG measurement configuration, or a target MCG measurement configuration.

5. The method according to claim 4, wherein the measurement configuration associated with the measurement ID is the MCG measurement configuration, and the method further comprises:
sending, by the first network side device, an RRC reconfiguration message to a terminal, wherein the RRC reconfiguration message comprises the MCG measurement configuration, and the MCG measurement configuration comprises measurement information related to a CPAC candidate cell.

6. The method according to any one of claims 1 to 4, wherein after the receiving, by the first network side device, a handover request acknowledgement message from the second network side device, the method further comprises:
sending, by the first network side device, the CPAC information to a third network side device, wherein the third network side device is a source secondary node of the conditional handover; and
receiving, by the first network side device, an SCG measurement configuration from the third network side device, wherein the SCG measurement configuration comprises measurement information of a CPAC candidate cell.

7. The method according to claim 6, wherein at least one of the following is satisfied:
the first network side device sends the CPAC information to the third network side device if the handover request acknowledgement message comprises the CPAC information; or
the CPAC information sent by the first network side device is carried by a secondary node modification request message.

8. The method according to claim 6, wherein the method further comprises:
sending, by the first network side device, an RRC reconfiguration message to a terminal, wherein the RRC reconfiguration message comprises the SCG measurement configuration, and the SCG measurement configuration comprises measurement information related to a CPAC candidate cell.

9. The method according to any one of claims 1 to 4, wherein the handover request message comprises at least one of the following:
indication information used for indicating initiating conditional handover with CPAC or multi-RAT dual connectivity MR-DC;
indication information used for indicating supporting CPAC;
indication information used for indicating supporting MR-DC;
indication information used for indicating supporting a plurality of SCG candidate cells;
the maximum number of at least one of the following that the second network side device is allowed to add: a CPAC candidate secondary node SN, a candidate PScell, or a candidate cell;
a range of a conditional reconfiguration identifier that the second network side device is allowed to add;
measurement configuration information configured by the first network device for a terminal;
a measurement result; or
information about one or more CPAC candidate cells that the first network device recommends the second network device to consider for configuring.

10. The method according to claim 9, wherein the CPAC candidate target cell information comprises at least one of the following:
frequency information;
a physical cell identifier; or
an execution condition, wherein a measurement ID indicated in the execution condition is a measurement ID in an MCG measurement configuration or an SCG measurement configuration.

11. The method according to claim 1, wherein the handover request acknowledgement message further comprises indication information, wherein the indication information is used for indicating that a CHO candidate cell in the handover request acknowledgement message comprises at least one CPAC candidate cell.

12. The method according to claim 11, wherein the indication information comprises at least one of the following:
a CHO indication with CPAC, wherein the CHO indication with CPAC is used for indicating that the second network side device is configured with a CPAC candidate cell;
at least one target PScell identifier, wherein the target PScell identifier is used for indicating that a target primary cell of a terminal is configured with a CPAC candidate cell; or
at least one piece of CHO conditional reconfiguration identifier information, wherein the CHO conditional reconfiguration identifier information is used for indicating that a target primary cell configuration corresponding to a CHO conditional reconfiguration identifier comprises at least one CPAC candidate cell.

13. The method according to claim 12, wherein the method further comprises:
sending, by the first network side device, an RRC reconfiguration message to a terminal, wherein the RRC reconfiguration message comprises conditional reconfiguration information of a CHO candidate cell, and the conditional reconfiguration information of the CHO candidate cell comprises at least one of the following:
an execution condition of a CPAC candidate cell, wherein a measurement ID indicated in the execution condition is a measurement ID in a target MCG measurement configuration;
a conditional reconfiguration identifier of a CPAC candidate cell; or
CPAC indication information, wherein the CPAC indication information is used for indicating that a configuration of the CHO candidate cell comprises at least one CPAC candidate cell.

14. The method according to claim 13, wherein
in the RRC reconfiguration message, an RRC reconfiguration message corresponding to the CHO candidate cell comprises a target MCG measurement configuration, and the target MCG measurement configuration comprises measurement information related to the CPAC candidate cell.

15. A conditional handover method, comprising:
receiving, by a second network side device, a handover request message from a first network side device, wherein the first network side device is a source node of conditional handover, the second network side device is a target node of the conditional handover, and the handover request message is used for the source node to request the target node to prepare resource for the conditional handover; and
sending, by the second network side device, a handover request acknowledgement message to the first network side device, wherein the handover request acknowledgement message is used for the target node to notify the source node of the prepared resource, and the handover request acknowledgement message comprises CPAC information.

16. The method according to claim 15, wherein the CPAC information comprises at least one of the following:
CPAC candidate cell information;
CPAC-related measurement requirement information;
CPAC conditional reconfiguration identifier information, wherein the CPAC conditional reconfiguration identifier information comprises a conditional reconfiguration identifier corresponding to at least one CPAC candidate cell prepared by the second network side device; or
CPAC conditional reconfiguration information, wherein the CPAC conditional reconfiguration information comprises at least one of the following: a conditional reconfiguration identifier; an execution condition; or RRC reconfiguration.

17. The method according to claim 16, wherein the CPAC-related measurement requirement information comprises at least one of the following:
a measurement object, wherein the measurement object comprises frequency information about measuring a CPAC candidate cell;
a measurement report configuration;
a conditional trigger configuration, wherein the conditional trigger configuration comprises a measurement event configuration corresponding to an execution condition of a CPAC candidate cell; or
a configuration of a measurement ID, wherein a measurement configuration associated with the measurement ID comprises at least one of the following: an MCG measurement configuration, an SCG measurement configuration, or a target MCG measurement configuration.

18. The method according to claim 17, wherein the measurement configuration associated with the measurement ID is the MCG measurement configuration, and
the method further comprises: initiating, by the second network side device, CPAC; and/or
the handover request acknowledgement message comprises the CPAC candidate cell information.

19. The method according to any one of claims 15 to 17, wherein the handover request message comprises at least one of the following:
indication information used for indicating initiating conditional handover with CPAC or MR-DC;
indication information used for indicating supporting CPAC;
indication information used for indicating supporting MR-DC;
indication information used for indicating supporting a plurality of SCG candidate cells;
the maximum number of at least one of the following that the second network side device is allowed to add: a CPAC candidate SN, a candidate PScell, or a candidate cell;
a range of a conditional reconfiguration identifier that the second network side device is allowed to add;
measurement configuration information configured by the first network device for a terminal;
a measurement result; or
information about one or more CPAC candidate cells that the first network device recommends the second network device to consider for configuring.

20. The method according to claim 19, wherein the method further comprises: sending, by the second network side device, a secondary node addition request message to a fourth network side device, wherein the fourth network side device is a target secondary node of the conditional handover, wherein
when considering the CPAC candidate cell, the second network device considers only the one or more CPC candidate target cells recommended by the first network device in the handover request message; or
the secondary node addition request message comprises CPAC information sent by the first network side device; or
when considering the CPAC candidate cell, the second network device considers only a frequency and/or a cell comprised in the measurement configuration information configured by the first network device for a terminal in the handover request message; or
when considering the CPAC candidate cell, the second network device considers only a frequency and/or a cell comprised in the measurement result in the handover request message.

21. The method according to claim 15, wherein the handover request acknowledgement message further comprises indication information, wherein the indication information is used for indicating that a CHO candidate cell in the handover request acknowledgement message comprises at least one CPAC candidate cell.

22. The method according to claim 21, wherein the indication information comprises at least one of the following:
a CHO indication with CPAC, wherein the CHO indication with CPAC is used for indicating that the second network side device is configured with a CPAC candidate cell;
at least one target PScell identifier, wherein the target PScell identifier is used for indicating that a target primary cell of a terminal is configured with a CPAC candidate cell; or
at least one piece of CHO conditional reconfiguration identifier information, wherein the CHO conditional reconfiguration identifier information is used for indicating that a target primary cell configuration corresponding to a CHO conditional reconfiguration identifier comprises at least one CPAC candidate cell.

23. The method according to claim 21, wherein the method further comprises:
sending, by the second network side device, a secondary node addition request message to a fourth network side device, wherein the fourth network side device is a target secondary node of the conditional handover; and
receiving, by the second network side device, secondary node addition acknowledgement information from the fourth network side device.

24. The method according to claim 23, wherein the method further comprises: performing, by the second network side device, one of the following if the secondary node addition acknowledgement information comprises at least one accepted CPAC candidate cell:
comprising a measurement configuration of the at least one accepted CPAC candidate cell in RRC reconfiguration corresponding to the CHO candidate cell; or
notifying, by the second network side device, the fourth network side device that RRC reconfiguration of a target PScell corresponding to the CHO candidate cell comprises a measurement configuration of the at least one accepted CPAC candidate cell.

25. A first network side device, comprising:
a sending module, configured to send a handover request message to a second network side device, wherein the first network side device is a source node of conditional handover, the second network side device is a target node of the conditional handover, and the handover request message is used for the source node to request the target node to prepare resource for the conditional handover; and
a receiving module, configured to receive a handover request acknowledgement message from the second network side device, wherein the handover request acknowledgement message is used for the target node to notify the source node of the prepared resource, and the handover request acknowledgement message comprises CPAC information.

26. A second network side device, comprising:
a receiving module, configured to receive a handover request message from a first network side device, wherein the first network side device is a source node of conditional handover, the second network side device is a target node of the conditional handover, and the handover request message is used for the source node to request the target node to prepare resource for the conditional handover; and
a sending module, configured to send a handover request acknowledgement message to the first network side device, wherein the handover request acknowledgement message is used for the target node to notify the source node of the prepared resource, and the handover request acknowledgement message comprises CPAC information.

27. A network side device, comprising a processor and a memory, wherein the memory stores a program or instructions executable on the processor, and the program or the instructions, when executed by the processor, implement the steps of the method according to any one of claims 1 to 24.

28. A readable storage medium, wherein the readable storage medium stores a program or instructions, and the program or the instructions, when executed by a processor, implement the steps of the method according to any one of claims 1 to 24.
